# EUROPÄISCHE PATENTANMELDUNG

(11) **EP 3 462 313 A1**
(43) Veröffentlichungstag der Anmeldung: **03.04.2019**
(21) Anmeldenummer: 17193502.6
(22) Anmeldetag: 27.09.2017
(51) Int. Cl.: G06F 9/48, G06F 9/50

(54) **VERFAHREN UND VERTEILTES DATENBANKSYSTEM ZUM RECHNERGESTÜTZTEN AUSFÜHREN EINES PROGRAMMCODES**

(71) Anmelder: Siemens Aktiengesellschaft, 80333 München (DE)
(72) Erfinder: Falk, Rainer, 85586 Poing (DE)

(57) **Zusammenfassung**

Die Erfindung betrifft ein Verfahren, mit dem es beispielsweise möglich ist, auf einen Smart Contract einer Blockkette, der fehlerhaft programmiert ist, zu reagieren und diesen ggf. abzubrechen. Weiterhin können auch herkömmliche Betriebssysteme und Cloud-basierte Betriebssysteme (Microsoft Azure, Amazon AWS, Siemens Mindsphere) mittels der Erfindung dahingehend verbessert werden, um eine Ausführung eines Smart Contracts/(ersten) Programmcodes zu verbessern. Hierdurch werden insbesondere Prozesse (insbesondere Blockchain Smart Contracts, Betriebssystem-Prozesse, Cloud-App) deutlich besser und deutlich kontrollierter ausgeführt.

## Beschreibung

Die Erfindung bezieht sich auf ein Verfahren und einen verteiltes Datenbanksystem zum rechnergestützten Ausführen eines Programmcodes.

Die Technologie von Blockketten (engl. Blockchains) bzw. "Distributed Ledgers" ist aktuell ein intensiv diskutierte Technologie, die insbesondere als verteilte Datenbank realisiert sein kann. Neben Anwendungen für dezentrale Bezahlsysteme (z.B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst oder referenziert z. B. Programmcode, der auch als sogenannter "Smart Contract" bezeichnet werden kann.

Eine Aufgabe der vorliegenden Erfindung ist es, ein Verfahren und verteilte Datenbank zum rechnergestützten Ausführen eines Programmcodes bereitzustellen.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Gemäß einem ersten Aspekt betrifft die Erfindung ein Verfahren zum rechnergestützten Ausführen eines ersten Programmcodes mit folgenden Verfahrensschritten:
- Speichern eines Steuerungsprogrammcodes in einer Steuerungstransaktion, wobei
   - die Steuerungstransaktion in einem zweiten Datenblock einer verteilten Datenbank gespeichert wird,
   - der Steuerprogrammcode Steuerungsfunktionen zum Steuern des ersten Programmcodes umfasst,
   - der Steuerungsprogrammcode durch die verteilte Datenbank ausgeführt wird;
- Zuordnen des ersten Programmcodes zu dem Steuerungsprogramm;
- Ausführen des ersten Programmcodes mittels der verteilten Datenbank und des Steuerungsprogrammcodes des zweiten Datenblocks,
   - wobei insbesondere durch eine Vielzahl von Knoten der verteilten Datenbank das Ausführen realisiert wird;

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter "Bereitstellen" kann im Zusammenhang mit der Erfindung beispielsweise ein Laden oder ein Speichern, beispielsweise einer Transaktion mit entsprechenden Daten verstanden werden. Dies kann beispieilsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder der verteilten Datenbank (bzw. deren Infrastruktur) verstanden werden.

Unter "Steuerungsfunktionen" können im Zusammenhang mit der Erfindung insbesondere Betriebssystemkommandos verstanden werden.

Unter "Smart-Contract-Prozess" können im Zusammenhang mit der Erfindung insbesondere ein Ausführen eines Programmcodes (z. B. des ersten Programmcodes) in einem Prozess (z. B. eines Betriebssystems) durch die verteilte Datenbank bzw. deren Infrastruktur verstanden werden.

Unter einer "Prüfsumme", beispielsweise die Datenblockprüfsumme, eine Datenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine der Transaktionen und/oder einem Teilbereich eines Datenblocks (z. B. der Block-Header eines Blocks einer Blockkette oder Datenblock-Header eines Datenblocks der verteilten Datenbank) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken (z. B. der erste Datenblock) zu verketten und insbesondere damit eine Integrität der verteilten Datenbank prüfbar zu machen. Hierdurch kann die Datenblockprüfsumme beispielsweise die Funktion der Verkettungsprüfsumme übernehmen oder in die Verkettungsprüfsumme eingehen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere für einen jeweiligen Datenblock der verteilten Datenbank den vorhergehenden Datenblock der verteilten Datenbank angibt bzw. referenziert (in der Fachsprache insbesondere häufig als "previous block hash" bezeichnet) [1]. Als Verkettungsprüfsumme kann beispielsweise eine Transaktionsprüfsumme oder die Datenblockprüfsumme eines Datenblocks verwendet werden, um einen neuen Datenblock mit einem Datenblock der verteilten Datenbank zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock der verteilten Datenbank umfasst jedoch vorzugsweise jeweils eine Verkettungsprüfsumme, die für einen vorhergehenden Datenblock des jeweiligen Datenblockes berechnet wurde.

Die Daten, die beispielsweise in einer Transkation eines Datenblocks gespeichert werden, können insbesondere auf unterschiedliche Weise realisiert werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder der verteilten Datenbank sein, eine Transaktionsprüfsumme eines Datenblocks mit den entsprechenden Daten (der verteilten Datenbank oder einer anderen Datenbank) oder eine Datenprüfsumme die über die Daten gebildet wurde.

Zusätzlich kann die entsprechende Transkation noch einen Verweis oder eine Angabe zu einem Speicherort (z. B. eine Adresse eine Fileservers und Angaben, wo die entsprechenden Daten auf dem Fileserver zu finden sind, eine Adresse einer anderen verteilten Datenbank, welche die Daten umfasst) umfassen. Die entsprechenden Daten könnten dann beispielsweise auch in einer weiteren Transaktion eines weiteren Datenblocks der verteilten Datenbank bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal bereitgestellt werden.

Auch kann beispielsweise zusätzlich zu der Prüfsumme ein Zusatzdatensatz (z. B. ein Verweis oder eine Angabe zu einem Speicherort) in der entsprechenden Transaktionen abgelegt sein, der insbesondere einen Speicherort angibt, wo die Daten abgerufen werden können. Das ist insbesondere dahingehend vorteilhaft, um eine Datengröße der Blockkette möglichst gering zu halten.

Unter "sicherheitsgeschützt" kann im Zusammenhang mit der Erfindung beispielsweise ein Schutz verstanden werden, der insbesondere durch ein kryptographisches Verfahren realisiert wird. Beispielsweise kann dies durch eine Nutzung der verteilten Datenbank für das Bereitstellen oder Übertragen oder Senden der entsprechenden Daten realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden.

Unter "Verketten der/von Datenblöcken einer verteilten Datenbank" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke der verteilten Datenbank verweisen bzw. diese referenzieren [1].

Unter "Einfügen in die verteilte Datenbank" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten einer verteilte Datenbank übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock der verteilten Datenbank verkettet [1]. Insbesondere kann dieses Validieren und/oder Verketten durch einen vertrauenswürdigen Knoten (z. B. einem Mining Node, einem Blockketten-Orakel oder eine Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock der verteilten Datenbank verkettet hat.

Unter "Transaktion" bzw. "Transaktionen" können im Zusammenhang mit der Erfindung beispielsweise ein Smart-Contract, eine Datenstruktur oder ein Transaktionsdatensatz verstanden werden, der insbesondere jeweils eine der Transaktionen oder mehrere Transkationen umfasst. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transkation kann insbesondere einen Programmcode umfassen, der beispielsweise einen Smart Contract realisiert. Beispielsweise können im Zusammenhang mit der Erfindung unter Transaktion auch eine Steuerungstransaktion und/oder Befehlstransaktion und/oder eine Zuordnungstransaktion verstanden werden.

Insbesondere ist unter "Speichern von Transaktionen in Datenblöcken" und dergleichen ein direktes Speichern oder indirektes Speichern zu verstehen. Unter einem direkten Speichern kann dabei beispielsweise verstanden werden, dass der entsprechende Datenblock oder die entsprechende Transaktion die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) umfasst und die Daten somit nicht direkt gespeichert sind.

Unter einem "Programmcode" können im Zusammenhang mit der Erfindung beispielsweise eine oder mehrere Programmbefehle verstanden werden, die insbesondere in einer oder mehreren Transaktionen gespeichert sind. Der Programmcode ist insbesondere ausführbar und wird beispielsweise durch die verteilte Datenbank ausgeführt. Dies kann beispielsweise mittels einer Ausführungsumgebung (z. B. eine virtuellen Maschine) realisiert werden, wobei die Ausführungsumgebung bzw. der Programmcode vorzugsweise Turing-vollständig sind. Der Programmcode wird vorzugsweise durch die Infrastruktur der verteilten Datenbank ausgeführt.

Unter einem "Smart Contract" kann im Zusammenhang mit der Erfindung beispielsweise ein ausführbarer Programmcode verstanden werden.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt/Inhalt einer bestimmten Transaktion zu lösen ist [1]. Eine solche rechenintensive Aufgabe wird beispielsweise auch als kryptographisches Puzzle bezeichnet.

Unter einer "verteilten Datenbank" kann im Zusammenhang mit der Erfindung beispielsweise eine dezentral verteilte Datenbank, eine Blockkette (engl. Blockchain) oder eine Peer-to-Peer Datenbank verstanden werden. Wird beispielsweise eine Blockkette verwendet, so kann diese insbesondere mittels einer Bitcoin-basierten Realisierung oder einer Ethereumbasierten Realisierung umgesetzt werden.

Unter "Datenblock", der insbesondere je nach Kontext und Realisierung auch als "Glied" oder "Block" bezeichnet sein kann, kann im Zusammenhang mit der Erfindung beispielsweise ein Datenblock einer verteilten Datenbank (z. B. eine Blockkette oder eine Peer to Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank eine Blockkette sein und ein Datenblock ein Block der Blockkette. Ein Datenblock kann beispielsweise Angaben zur Größe (Datengröße in Byte) des Datenblocks, einen Datenblock-Header (engl. Blockheader), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1].

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes der verteilten Datenbank" kann im Zusammenhang mit der Erfindung beispielsweise nur der Datenblock der verteilten Datenbank verstanden werden, der insbesondere einem (bestimmten) Datenblock direkt vorhergeht. Alternativ können unter "vorhergehender Datenblöcke eines (bestimmten) Datenblockes der verteilten Datenbank" insbesondere auch alle Datenblöcke der verteilten Datenbank verstanden werden, die dem bestimmten Datenblock vorhergehen. Hierdurch kann beispielsweise die Verkettungsprüfsumme oder die Transaktionsprüfsumme insbesondere nur über das dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten einer verteilten Datenbank" und dergleichen, können im Zusammenhang mit der Erfindung beispielsweise Geräte (z. B. Feldgeräte), Rechner, Smart-Phones, Clients oder Teilnehmer verstanden werden, die Operationen (mit) der verteilten Datenbank (z. B. eine Blockkette) durchführen [1]. Solche Knoten können beispielsweise Transaktionen einer verteilten Datenbank bzw. deren Datenblöcke ausführen oder neue Datenblöcke mit neuen Transaktionen in die verteilte Datenbank mittels neuer Datenblöcke einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), handeln, um eine Manipulation des Knotens zu verhindern. Alternativ oder zusätzlich kann beispielsweise ein vertrauenswürdiger Knoten beim Verketten eines neuen Datenblocks mit der verteilten Datenbank, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt.

Unter einem "Rechner" kann im Zusammenhang mit der Erfindung beispielsweise ein Computer(system), ein Client, ein Smart-Phone, ein Gerät oder ein Server, die jeweils außerhalb der Blockkette angeordnet sind bzw. kein Teilnehmer der verteilten Datenbank (z. B. der Blockkette) sind (also keine Operationen mit der verteilten Datenbank durchführen oder diese nur abfragen, ohne jedoch Transaktionen durchzuführen, Datenblöcke einfügen oder Proof-of-Work-Nachweise berechnen), verstanden werden. Alternativ kann insbesondere auch unter einem Rechner ein Knoten der verteilten Datenbank verstanden werden.

Mit der Erfindung ist es insbesondere möglich eine dezentrale Infrastruktur zur Ausführung von Transaktionen zu realisieren. Beispielsweise kann die anwendungsspezifische Logik einer Blockketten-basierten Lösung dabei durch Smart Contracts realisiert werden. Dabei handelt es sich vorzugsweise um einen Programmcode, der insbesondere durch die Blockketten-Infrastruktur ausgeführt wird. Durch den Smart Contract Programmcode ist beispielsweise festlegbar, welche Transaktionen gültig sind. Die Ausführung eines Smart Contracts kann dabei beispielsweise vergebührt werden, d.h. dass z. B. für das Erzeugen von Transaktionen gemäß eines Smart Contracts bezahlt werden muss. Dabei handelt es sich beispielsweise um eine Kryptowährung bzw. eine kryptographische Tauscheinheit.

Mit der Erfindung wird insbesondere eine Verwaltungsarchitektur (z. B. ein Verwaltungssystem (Betriebssystem)) für Smart-Contract-Prozesse bereitgestellt, die in einer Blockkette ausgeführt werden (z. B. Prozesse, die einen Programmcode ausführen, wobei insbesondere der Prozess selbst durch die verteilte Datenbank bzw. deren Infrastruktur ausgeführt wird). Dadurch werden beispielsweise elementare Betriebssystemdienste eines herkömmlichen Betriebssystems auch für eine verteilte Datenbank (z. B. eine Blockchain-Infrastruktur) verfügbar gemacht.

Dadurch kann insbesondere ein Smart Contract (z. B. der erste Programmcode) einfach um Verwaltungsfunktionen ergänzt werden, die für einen ordnungsgemäßen Betrieb erforderlich sind. Ein entsprechender Smart Contract muss insbesondere dadurch nicht individuell für sich selbst Überwachungs- und Verwaltungsroutinen implementieren.

Das Verfahren ist zudem dahingehend vorteilhaft, um insbesondere durch eine dezentrale Blockketten-Infrastruktur eine vertrauenswürdige Ausführung eines Smart Contracts (z. B. des ersten Programmcodes) zu realisieren. Die Erfindung erlaubt es beispielsweise eine dezentrale Blockkette zu verwenden, um einen Smart Contract sicherheitsgeschützt auszuführen, aber dennoch bestimmte Steuerungsfunktionen für den Smart Contract bereitzustellen. Beispielsweise können die erlaubten Steuerungsfunktionen (z. B. Steuerungsaktionen - Starten eines Prozesses, Laden oder Ausführen des ersten Programmcodes etc.) für den Smart Contract (z. B. den ersten Programmcode) zusammen mit dem jeweiligen ersten Programmcode definiert werden und mit diesem ersten Programmcode in Transaktionen eines Datenblocks der verteilten Datenbank gespeichert werden. Alternativ können die erlaubten Steuerungsfunktionen später (also in einer anderen Transaktion eines anderen Datenblocks oder des gleichen Datenblocks (der den ersten Programmcode umfasst) gespeichert sein).

Bei einer ersten Ausführungsform des Verfahrens werden die Glieder über eine kryptographische Hashfunktion miteinander verkettet.

Bei einer weiteren Ausführungsform des Verfahrens ist die verteilte Datenbank eine Blockkette und ein Datenblock ist ein Block der Blockkette oder die verteilte Datenbank ist eine Peer-to-Peer Datenbank.

Das Verfahren ist dahingehend vorteilhaft, um insbesondere eine dezentral verteilte Datenbank zu realisieren, bei der der administrative Aufwand für einen zentralen Knoten entfällt.

Bei einer weiteren Ausführungsform des Verfahrens steuert eine jeweilige Steuerungsfunktion der Steuerungsfunktionen
- ein Laden und/oder Ausführen des ersten Programmcodes und/oder eines weiteren Programmcodes, oder
- ein Starten mindestens eines Prozesses, der den ersten Programmcode und/oder den weiteren Programmcode ausführt, wobei der Prozess insbesondere durch die verteile Datenbank ausgeführt wird, oder
- ein Beenden/Abbrechen mindestens eines Prozesses/mindestens des einen Prozesses, der den ersten Programmcode und/oder den weiteren Programmcode ausführt, oder
- ein Zuordnen von Berechtigungsinformation an mindestens einen Prozess/mindestens den einen Prozess oder an Dateien, die den ersten Programmcode und/oder den weiteren Programmcode ausführen und/oder von diesen verwendet werden, oder
- ein Zuordnen von Prioritätsinformationen an mindestens einen Prozesses/mindestens den einen Prozess, die den ersten Programmcode oder den weiteren Programmcode ausführen, oder
- ein Zuordnen von Prioritätsinformationen an den ersten Programmcode oder den weiteren Programmcode,
- ein Zuordnen von Quotas an die jeweiligen Programmcodes oder Prozesse, oder
- eine Steuerungsfunktion eine Kombination der genannten Steuerungsaktionen.

Das Verfahren ist dahingehend vorteilhaft, um insbesondere eine Vielzahl von Steuerungsfunktionen zu realisieren, damit insbesondere eine Ausführung des ersten Programmcodes besser überwacht werden kann und ggf. auch abgebrochen werden kann. Weiterhin ist es möglich, beispielsweise einen Programmcode (Smart Contract) mehrfach mit unterschiedlichen Beschränkungen auszuführen, ohne den Programmcode selbst anpassen zu müssen.

Bei einer weiteren Ausführungsform des Verfahrens wird eine Befehlstransaktion mit einem Steuerbefehl in einem dritten Datenblock der verteilten Datenbank gespeichert und ein Steuerbefehl wird einer oder mehreren der Steuerungsfunktionen zugeordnet.

Das Verfahren ist dahingehend vorteilhaft, um insbesondere sicherheitsgeschützt zu definieren, auf welche Steuerungsbefehle auf welche Weise reagiert wird. Dies kann beispielsweise bei der Definition/Speichern des ersten Programmcodes geschehen, indem beispielsweise eine entsprechende Definition in der Transaktion des ersten Programmcodes mitgespeichert wird. Alternativ kann eine solche Definition in einer anderes Transaktion, die in einem Datenblock der verteilten Datenbank gespeichert wird, hinterlegt werden. Vorteilhaft ist hierbei beispielsweise, dass eine solche Definition für den ersten Programmcode nicht mehr geändert (also manipuliert) werden kann.

Bei einer weiteren Ausführungsform des Verfahrens wird eine/die Befehlstransaktion mit einem Steuerbefehl in einem dritten Datenblock der verteilten Datenbank gespeichert und mittels der verteilten Datenbank und dem Steuerungsprogrammcode unter Verwendung der dem Befehl zugeordneten Steuerungsfunktion ein Ausführen des ersten Programmcodes gesteuert.

Das Verfahren ist dahingehend vorteilhaft, um insbesondere sicherheitsgeschützt die Ausführung und Steuerung des ersten Programmcodes von einem beliebigen Knoten der verteilten Datenbank zu realisieren.

Bei einer weiteren Ausführungsform des Verfahrens stellt der Steuerungsprogrammcode Ausführungsdaten zum ersten Programmcode bereit.

Das Verfahren ist dahingehend vorteilhaft, um insbesondere Ausführungsdaten (z. B. Ressourcenverbrauch, Prozesspriorität usw.) bei der Ausführung des ersten Programmcodes abfragen zu können.

Bei einer weiteren Ausführungsform des Verfahrens wird beim Zuordnen der erste Programmcode in einer ersten Transaktion eines ersten Datenblocks der verteilten Datenbank gespeichert.

Das Verfahren ist dahingehend vorteilhaft, um insbesondere eine Ausführung des ersten Programmcodes, der in der verteilten Datenbank gespeichert ist, zu realisieren. Hierdurch wird insbesondere erreicht, dass der erste Programmcode vorzugsweise unveränderlich in der verteilten Datenbank gespeichert ist. Dadurch wird insbesondere eine Manipulation des Programmcodes zu einem späteren Zeitpunkt verhindert.

Bei einer weiteren Ausführungsform des Verfahrens wird beim Zuordnen eine Zuordnungsinformation in einer Zuordnungstransaktion eines/des ersten Datenblocks der verteilten Datenbank gespeichert, wobei insbesondere mittels der Zuordnungsinformation des ersten Programmcodes zu dem Steuerungsprogrammcode zugeordnet wird.

Das Verfahren ist dahingehend vorteilhaft, um insbesondere eine Ausführung des ersten Programmcodes, der außerhalb der verteilten Datenbank gespeichert ist, zu realisieren. Hierdurch wird insbesondere erreicht, dass der erste Programmcode noch verändert werden kann, falls beispielsweise ein Programmierfehler aufgetaucht ist, oder es ist möglich, den Speicherverbrauch der verteilten Datenbank zu reduzieren. Die Zuordnungsinformation kann beispielsweise einen Verweis/eine Angabe zu einem Speicherort des ersten Programmcodes und/oder eine Prüfsumme über den ersten Programmcode umfassen. Alternativ oder zusätzlich kann die Zuordnungsinformation beispielsweise eine Prüfsumme über den Steuerungsprogrammcode und/oder einen Verweis/eine Angabe zu einem Speicherort des Steuerungsprogrammcode (z. B. einen Verweis auf den entsprechenden Datenblock) umfassen.

Bei einer weiteren Ausführungsform des Verfahrens wird durch den Steuerungsprogrammcode ein nutzbarer Funktionsumfang des ersten Programmcodes auf einen vorgegeben Funktionsumfang reduziert.

Das Verfahren ist dahingehend vorteilhaft, um insbesondere bestimmte Programmbefehle oder Steuerungsaktionen bei der Ausführung des ersten Programmcodes zu verbieten. Beispielsweise kann auf diese Weise für einen bestimmten Programmcode der in einer Turing-vollständigen Ausführungsumgebung/Programmiersprache ausgeführt wird, der Funktionsumfang reduziert werden. Hierdurch können beispielsweise Programmbefehle/Steuerungsaktionen wie Sprungbefehle oder Schleifen (z. B. For/While-Schleifen) unterbunden werden. Insbesondere lässt sich z. B. in einem Extremfall eine Turing-vollständige Ausführungsumgebung auf einfache arithmetische Operationen reduzieren. Hierdurch kann insbesondere die Ausführung des ersten Programmcodes gegen ungewollte Benutzung von Programmbefehlen/Steuerungsaktionen geschützt werden.

Gemäß eines weiteren Aspekts betrifft die Erfindung ein verteiltes Datenbanksystem zum Ausführen eines ersten Programmcodes aufweisend:
- eine erste Schnittstelle zum Speichern eines Steuerungsprogrammcodes in einer Steuerungstransaktion, wobei
   - die Steuerungstransaktion in einem zweiten Datenblock einer verteilten Datenbank gespeichert wird,
   - der Steuerprogrammcode Steuerungsfunktionen zum Steuern des ersten Programmcodes umfasst,
   - der Steuerungsprogrammcode durch die verteilte Datenbank ausgeführt wird;
- eine zweite Schnittstelle zum Zuordnen des ersten Programmcodes zu dem Steuerungsprogramm;
- eine Ausführungsumgebung, wobei
   - der erste Programmcode mittels des Steuerungsprogrammcodes ausgeführt wird,
   - insbesondere eine Vielzahl von Knoten des verteilten Datenbanksystems die Ausführungsumgebung bilden;

Bei einer weiteren Ausführungsform des verteilten Datenbanksystems umfasst das verteilte Datenbanksystem zumindest ein weiteres Modul oder mehrere weitere Module zur Durchführung des erfindungsgemäßen Verfahrens (oder einer seiner Ausführungsformen) .

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass das genannte erfindungsgemäße verteilte Datenbanksystem erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es das erfindungsgemäße verteilte Datenbanksystem erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung als ein Ablaufdiagramm;
- Fig. 2: ein zweites Ausführungsbeispiel der Erfindung als Datenbanksystem;
- Fig. 3: ein drittes Ausführungsbeispiel der Erfindung als Datenbanksystem;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

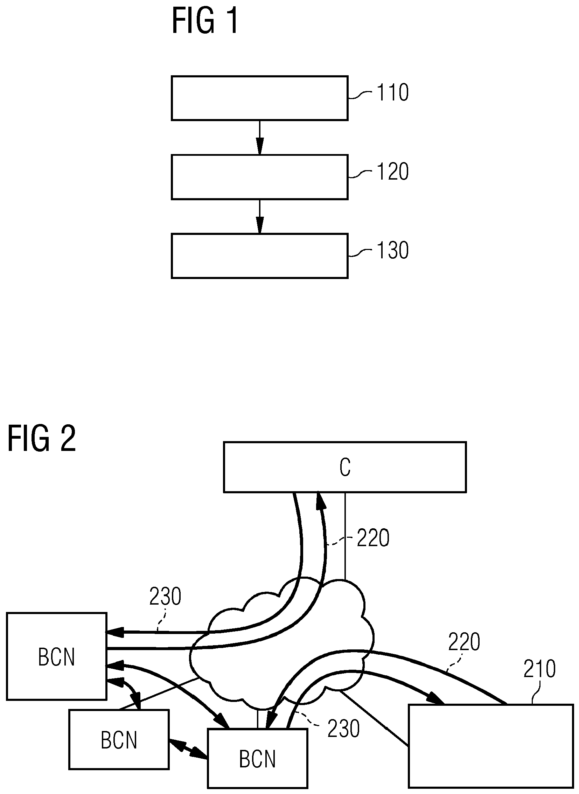

Die Fig. 1 zeigt ein erstes Ausführungsbeispiel der Erfindung als ein Ablaufdiagramm des erfindungsgemäßen Verfahrens zum rechnergestützten Ausführen eines ersten Programmcodes.

Das Verfahren ist vorzugsweise rechnergestützt realisiert.

Im Einzelnen wird in diesem Ausführungsbeispiel ein Verfahren zum rechnergestützten Ausführen eines ersten Programmcodes realisiert.

Das Verfahren umfasst einen ersten Verfahrensschritt zum Speichern 110 eines Steuerungsprogrammcodes in einer Steuerungstransaktion, wobei die Steuerungstransaktion in einem zweiten Datenblock einer verteilten Datenbank gespeichert wird. Zudem umfasst der Steuerungsprogrammcode Steuerungsfunktionen zum Steuern des ersten Programmcodes und der Steuerungsprogrammcode wird durch die verteilte Datenbank ausgeführt. Die Steuerungsfunktionen sind vorzugsweise über Schnittstellen des Steuerungsprogrammcodes nutzbar.

Das Verfahren umfasst einen zweiten Verfahrensschritt zum Zuordnen 120 des ersten Programmcodes zu dem Steuerungsprogramm. Dies kann beispielsweise durch ein Speichern des ersten Programmcodes in einer ersten Transaktion realisiert werden, wobei die erste Transaktion in einem ersten Datenblock der verteilten Datenbank gespeichert wird.

Der Steuerungsprogrammcode kann dabei auf unterschiedliche Weise realisiert werden. Er kann beispielsweise im einfachsten Fall eine Übertragung von Steuerungsfunktionen zum Steuern des ersten Programmcodes an den ersten Programmcode nur übermitteln, indem der entsprechende Speicherort/Verweis auf den ersten Programmcode genutzt wird und die entsprechende Steuerungsfunktion, die z. B. durch eine Befehlstransaktion bereitgestellt wurde, genutzt wird. Der erste Programmcode oder eine separate Ausführungsumgebung zur Ausführung des ersten Programmcodes (z. B. ein konventionelles Betriebssystem) setzten die entsprechenden Steuerungsbefehle dann um. Dabei kann beispielsweise der Steuerungsprogrammcode lediglich einen Steuerungsbefehl umfassen. In einem solchen Fall wäre insbesondere eine Steuerungstransaktion mit dem Funktionsumfang einer Befehlstransaktion, die z. B. ein Betriebssystemkommando umfasst, identisch.

Mittels des Steuerungsprogrammcodes können beispielsweise entsprechende Steuerungsaktionen auch nur bereitgestellt werden, sodass beispielsweise ein konventionelles Betriebssystem diese abrufen und umsetzen kann. Dabei kann der Steuerungsprogrammcode lediglich eine Steuerungsaktion/einen Steuerbefehl umfassen, die durch ein Betriebssystem selbständig von der verteilten Datenbank abgerufen (z. B. unter Verwendung einer Zuordnungsinformation, die beim Zuordnen bereitgestellt wurde) werden.

Der Steuerungsprogrammcode kann aber auch komplexe Funktionen realisieren indem dieser ganz oder teilweise die Funktionen einen Betriebssystems realisiert und die entsprechende Steuerung/Ausführung des ersten Programmcodes selbst realisiert. Dabei kann der Steuerungsprogrammcode vorzugsweise ein virtualisiertes Betriebssystem realisieren oder eine virtuelle Maschine, deren Funktionsumfang vorzugsweise für den ersten Programmcode spezifisch eingestellt werden kann.

Der Steuerungsprogrammcode kann somit beispielsweise die Funktionalitäten eines oder mehrerer Betriebssystemkommandos/ Steuerungsfunktionen selbst realisieren oder eine Weiterleitung/ein Bereitstellen von Betriebssystemkommandos/Steuerungsfunktionen für ein herkömmliches Betriebssystem realisieren.

Das Verfahren umfasst einen dritten Verfahrensschritt zum Ausführen 130 des ersten Programmcodes mittels der verteilten Datenbank und des Steuerungsprogrammcodes, wobei insbesondere durch eine Vielzahl von Knoten der verteilten Datenbank das Ausführen realisiert wird.

Das Ausführen kann hierbei auf unterschiedliche Weise realisiert werden. Ist beispielsweise der erste Programmcode in der verteilten Datenbank abgelegt, so kann das Ausführen durch die verteilte Datenbank bzw. deren Infrastruktur realisiert werden. Wird die Ausführung des ersten Programmcodes beispielsweise mit Hilfe eines konventionelles Betriebssystem gesteuert, wird die Ausführung mittels der verteilten Datenbank und des Steuerungsprogrammcodes dadurch realisiert, dass die entsprechenden Steuerungsaktionen/Steuerungsbefehle dem konventionellen Betriebssystem bereitgestellt werden (z. B. an das Betriebssystem übermittelt werden oder von dem Betriebssystem selbständig aus der verteilten Datenbank abgerufen) .

Die Transaktionen können beispielsweise jeweils mit einer Transaktionsprüfsumme kryptographisch geschützt sein, die vorzugsweise ebenfalls im entsprechenden Datenblock oder der entsprechenden Transaktion gespeichert ist.

Die Datenblöcke sind jeweils vorzugsweise mittels einer Verkettungsprüfsumme des entsprechenden vorhergehenden Datenblocks miteinander verkettet. Hierzu wird vorzugsweise eine kryptographische Hashfunktion verwendet.

Vorzugsweise ist die verteilte Datenbank als Blockkette realisiert und die Datenblöcke sind insbesondere Blöcke der Blockkette. Die verteilte Datenbank kann aber auch auf andere Weise realisiert sein. Eine weitere Möglichkeit wäre eine Peer-to-Peer Datenbank.

Um das Ausführen des ersten Programmcodes zu steuern, kann beispielsweise ein Steuerbefehl vorzugsweise einer oder mehreren der Steuerungsfunktionen zugeordnet sein bzw. werden. Eine solche Zuordnung kann beispielsweise ebenfalls in einem Datenblock der verteilten Datenbank gespeichert sein.

Um nun den ersten Programmcode zu steuern, wird eine Befehlstransaktion mit einem Steuerbefehl beispielsweise in einem dritten Datenblock der verteilten Datenbank gespeichert. Mittels der verteilten Datenbank und des Steuerungsprogrammcodes kann unter Verwendung der dem Befehl zugeordneten Steuerungsfunktion ein Ausführen des ersten Programmcodes gesteuert werden. Beispielsweise ein Starten eines Prozesses, der den ersten Programmcode ausführt, ein Stoppen eines Prozesses, der den ersten Programmcode ausführt usw.

Mit anderen Worten kann mit der Erfindung die Ausführung eines Programmcodes, der von einer verteilten Datenbank bzw. deren Infrastruktur ausgeführt wird, auf gesicherte und/oder manipulationsgeschützte Weise gesteuert werden.

Mittels der Erfindung kann beispielsweise auf Basis der verteilten Daten eines herkömmlichen Betriebssystems (Server, Cloud) verwaltet werden. Hierdurch können beispielsweise folgende Steuerungsaktionen gesteuert/verwaltet werden:
- Laden von Apps/Containern
- Starten von Prozessen/Containern
- Beenden von Prozessen/Containern (kill)
- Zuweisen von Berechtigungsinformation eines Prozesses oder von Dateien
- Zuweisen von Prioritätsinformation (Unix nice-Parameter)
- Zuordnen von Quota zu Prozessen / Containern

Dazu werden jeweils Befehlstransaktionen (Betriebssystemkommandos) als Transkation beispielsweise in eine Blockkette eingestellt. Diese werden von einem Betriebssystem ausgewertet und, wenn die Transaktion (z. B. Befehlstransaktionen und/oder Steuerungstransaktionen) mit ihren Kommandos oder Befehlenden (z. B. Steuerungsprogrammcode bzw. Steuerungsfunktionen, Betriebssystemkommandos) gültig ist, ausgeführt (z. B. indem der Steuerungsprogrammcode diese Informationen entsprechend bereitstellt). Die Gültigkeit der entsprechenden Transaktion bzw. der Kommandos oder Befehlenden kann dann beispielsweise über die Transaktionsprüfsumme und/oder Datenblockprüfsumme festgestellt werden (z. B. Prüfung der digitalen Signatur des Transaktionserstellers und Überprüfen, ob dieser zum Ausführen eines solchen Befehls berechtigt ist).

Weiterhin kann dadurch einfach eine dezentrale Administration realisiert werden, ohne dass sich ein Benutzer bzw. Administrator auf dem über die Blockkette verwalteten System einloggen muss.

Weiterhin stellt das Betriebssystem operative Daten (Prozessliste, Prozessorlast, Memoryverbrauch) in einer Blockkette als Transaktion bereit. Dadurch kann ein entsprechender Smart Contract automatisch die Daten auswerten und geeignet darauf reagieren (z.B. Prozess beenden).

Dies ist insbesondere vorteilhaft, wenn Server/Cloud-Dienste gehostet werden. Dann kann ein Nutzer über eine Blockkette die genutzten Dienste steuern und überwachen.

Weiterhin kann ggf. einfach und flexibel ein Prozess/Container in einer Cloud-Umgebung gestartet werden, da kein Administrationszugang zu dem Cloud-System eingerichtet sein muss. Die Abrechnung von Cloud-Diensten kann über die Blockkette erfolgen. Dadurch wird ein flexibles Deployment von Apps/Containern in einer verteilten Infrastruktur ermöglicht, da Nutzer/Administratoren auf den Zielsystemen keinen Nutzeraccount benötigen und sich dort anmelden müssen (Login-Shell).

Mit der Erfindung lässt sich insbesondere auch ein Betriebssystem zur kontrollierten Ausführung des ersten Programmcodes (z. B. ein Smart Contract) auf Basis der verteilten Datenbank realisieren. Dabei realisiert der Steuerungsprogrammcode die Funktionalitäten des Betriebssystem selbst, anstelle entsprechender Betriebssystemkommandos (z. B. Steuerbefehle, Steuerungsfunktionen) einem herkömmlichen Betriebssystem bereitzustellen.

Erfindungsgemäß wird insbesondere ein verteiltes Betriebssystem (auch als SCOS oder Smart Contract Betriebssystem bezeichnet) auf Basis einer Blockkette vorgeschlagen. Es ist beispielsweise als Steuerungsprogrammcode (z. B. ein Smart Contract, der den Steuerungsprogrammcode umfasst) für eine Blockketten-Plattform realisiert. Das Betriebssystem kann instanziiert, d.h. in der Blockketten-Plattform aktiviert und in der Blockkette ausgeführt werden.

Das verteilte Betriebssystem kontrolliert die Ausführung von Programmcodes (auch als SC-Prozess, SCP bezeichnet), z. B. der erste Programmcode, der auch als Smart Contract realisiert sein kann. Ein Smart Contract Prozess SCP (also ein Prozess, der den ersten Programmcode ausführt) kann dazu einer SCOS-Instanz zugeordnet werden. Dies kann beispielsweise dadurch realisiert werden, dass ein unter SCOS-Kontrolle ausgeführter Smart Contract Prozess auf dem SCP zugeordnete Prozessverwaltungsdaten zugreift. D.h. die Smart Contract Prozess-Verwaltungsdaten werden abhängig von der Ausführung des Smart Contract Prozesses aktualisiert. Dabei sind Smart Contract Prozess-Verwaltungsdaten beispielsweise:
- Ressourcenverbrauch (verbrauchte Kryptowährung) eines SCP
- Anzahl (absolute Anzahl von Transaktionen) bzw. Rate (Transaktionen je Stunde), die ein SCP generieren kann.

Dabei kann ein Smart Contract Prozess einzeln durch das verteilte Betriebssystem verwaltet werden. Es ist jedoch auch möglich, mehrere Smart Contract Prozesse (die mehrfach den ersten Programmcode ausführen oder unterschiedliche Programmcodes ausführen) zu einer Gruppe zusammenzufassen und für die Gruppe mehrerer Smart Contract Prozesse die Verwaltungsdaten zu erfassen oder die Prozesse zu beenden.

Dadurch können beispielsweise mehrere Smart Contract Prozesse eines Benutzers zu einer Ressourcengruppe zusammengefasst werden und gemeinsam überwacht werden. D.h. die Gruppe von Smart Contract Prozessen teilen sich gemeinsame Smart Contract Prozess-Verwaltungsdaten.

Das verteilte Betriebssystem realisiert also insbesondere einen Watchdog als Smart Contract, der in der Blockkette läuft und einen (oder mehrere) andere Smart Contracts (z. B. erste Programmcodes) überwacht. Dies kann auch insbesondere als Smart-Contract-Quota-Manager verstanden werden, da ein Smart Contract Prozess nur gemäß des zugeordneten Quotas Blockketten-Ressourcen verbrauchen kann (z. B. Bitcoins).

Der überwachte Smart Contract ist nur aktiv, solange die entsprechende Kill-Transaktion, die beispielsweise durch eine Befehlstransaktion in die Blockkette eingestellt wird, nicht aktiv ist, oder solange keine aktuelle Suspend-Transaktion (ebenfalls eine Befehlstransaktion, die den Suspend-Befehl als Steuerbefehl umfasst) vorliegt. Dabei kann insbesondere eine Suspend-Transaktion durch eine Unsuspend-Transaktion wieder aufgehoben werden.

Eine Kill/Suspend-Transaktion kann beispielsweise automatisch erzeugt werden, wenn ein Smart Contract Prozess vorgegebene Kriterien verletzt (Ressourcenverbrauchsüberschreitung) oder manuell durch eine durch einen Administrator eingestellte Kill-Transaktion.

Weiterhin können administrativ Verwaltungstranskationen in die Blockkette eingestellt werden.

Abhängig von den eingestellten Verwaltungstransaktionen wird ein Smart Contract Prozess beendet, d.h. er kann keine weiteren Transaktionen mehr erzeugen. Dies hat den Vorteil, dass ein Smart Contract administrativ durch Einstellen einer Kill-Transaktion beendet werden kann. Der beendete Smart Contract kann danach keine weiteren Transaktionen mehr generieren.

Weiterhin kann einem Smart Contract Prozess durch eine Verwaltungstransaktion ein zusätzliches Budget (Quota) zugeordnet werden, das er verbrauchen kann (z. B. Bitcoins). Ein Smart Contract (also der erste Programmcode) reduziert bei seiner Ausführung das ihm zugeordnete Quota. Eine neue Transaktion kann durch den Smart Contract Prozess nur erzeugt werden, wenn das ihm zugeordnete Quota positiv ist. Dadurch kann ein Benutzer kontrollieren, wie viele von seinem, ihm zur Verfügung stehenden Ressourcen durch einen bestimmten Smart Contract verbraucht werden kann.

Weiterhin wird beispielsweise verhindert, dass bei einem Programmierfehler das Guthabenkonto eines Benutzers durch einen fehlerhaften Smart Contract vollständig verbraucht wird.

Falls ein Smart Contract Prozess die zugeteilten Ressourcen (Quota) aufgebraucht hat, kann er beispielsweise angehalten werden - beispielsweise durch eine Suspend-Transaktion. Der Smart Contract Prozess wird angehalten, bis wieder Ressourcen zugeteilt werden - beispielsweise durch eine Unsuspend-Transaktion, die durch einen Smart-Contract gesteuert bei einem ausreichenden Vorhandensein eines entsprechenden Guthabens (z. B. Bitcoins). In einer anderen Variante wird der Smart Contract Prozess beendet (Kill). Dazu kann automatisch eine Kill-Transaktion für den betroffenen Smart Contract Prozess erzeugt und in die Blockkette eingestellt werden.

Die Fig. 2 zeigt ein Ausführungsbeispiel der Erfindung. Im Einzelnen wird ein Verwaltungssystem (Betriebssystem) für Smart-Contract-Prozesse bereitgestellt, die in einer Blockchain ausgeführt werden. Dadurch werden elementare Betriebssystemdienste eines herkömmlichen Betriebssystems auch für eine Blockketten-Infrastruktur verfügbar gemacht.

Dadurch kann ein Smart Contract (z. B. der erste Programmcode) einfach um Verwaltungsfunktionen ergänzt werden, die für einen ordnungsgemäßen Betrieb erforderlich sind. Ein Smart Contract muss dadurch insbesondere nicht individuell für sich selbst Überwachungs- und Verwaltungsroutinen implementieren.

Die Fig. 2 zeigt ein beispielhaftes System mit mehreren Blockketten-Knoten BCN, die eine Blockkette realisieren (z. B. Bitcoin-Knoten, Hyperledger-Knoten oder Ethereum-Knoten). Die Pfeile stellen möglichen Informationsfluss dar. Da es sich bei einer Blockkette um eine dezentrale, verteilte Datenbank handelt, ist beispielsweise die Kommunikation mit einer der Mehrzahl von gleichartigen Blockketten-Knoten BCN möglich.

Erfindungsgemäß wird eine Cloud-Plattform C über die Blockkette verwaltet: Eine Management-Station 210 (z. B. durch einen Administrator bedient) stellt dazu eine Steuerungstransaktion 220 ein, um beispielsweise einen ersten Programmcode (z. B. Apache-Container) zu starten.

Die Steuerungstransaktion 220 wird in der Blockkette validiert. Die Cloud-Plattform C wertet die Steuerungstransaktion 220 in einem Block der Blockkette als gültig bestätigte Transaktion aus und startet den entsprechenden Container bzw. ersten Programmcode. Die Steuerungstransaktion 220 kann beispielsweise einen eindeutigen Identifier des Containers (z. B. dessen URL, Hash-Wert) umfassen, sowie Quota-Information (z. B. maximale Netzwerkübertragungsrate) und Berechtigungsinformation (z.B. eine Group-ID, unter der der Container ausgeführt werden soll).

Weiterhin stellt die Cloud-Plattform C dem gestarteten Container zugeordnete Überwachungsdaten als Transaktion 230 ein (z.B. CPU-Last, Speicherverbrauch, Übertragungsvolumen).

Entsprechend können auch Smart Contracts (Smart Contract Prozesse) durch eine Blockketten-Transkation geladen und aktiviert werden bzw. angehalten oder gestoppt werden.

Auch können einem Smart Contract (Prozess) beim Start und/oder während der Ausführung Verwaltungsdaten zugeordnet werden (Quotas, Berechtigungsinformation). Dabei kann die Überwachung und Steuerung von Smart Contract Prozessen selbst durch einen Smart Contract der Blockketten realisiert sein.

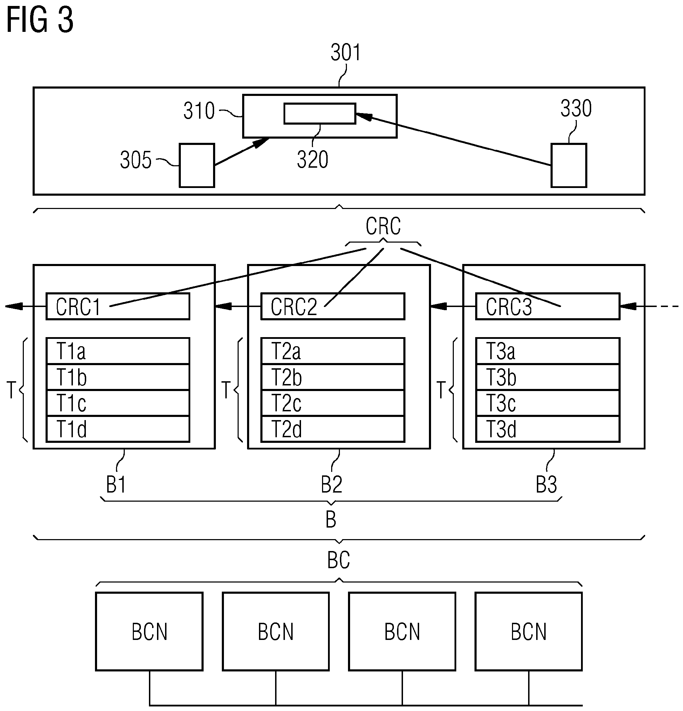

Die Fig. 3 zeigt ein weiteres Ausführungsbeispiel der Erfindung. Fig. 3 zeigt dabei ein verteiltes Datenbanksystem 301, das beispielsweise mittels einer Blockkette BC realisiert wird.

Im Einzelnen zeigt die Fig. 3 Blöcke B, beispielsweise ein erster Block B1, ein zweiter Block B2 und ein dritter Block B3, der Blockkette BC.

Die Blöcke B umfassen jeweils mehrere Transaktionen T. Der erste Block B1 umfasst beispielsweise eine erste Transaktion T1a, eine zweite Transaktion T1b, eine dritte Transaktion T1c und eine vierte Transaktion T1d.

Der zweite Block B2 umfasst beispielsweise eine fünfte Transaktion T2a, eine sechste Transaktion T2b, eine siebte Transaktion T2c und eine achte Transaktion T2d.

Der dritte Block B3 umfasst beispielsweise eine neunte Transaktion T3a, eine zehnte Transaktion T3b, eine elfte Transaktion T3c und eine zwölfte Transaktion T3d.

Die Blöcke B umfassen jeweils zusätzlich noch eine der Verkettungsprüfsummen CRC, die abhängig vom direkten Vorgänger-Block gebildet wird. Somit umfasst der erste Block B1 eine erste Verkettungsprüfsumme CRC1 von seinem Vorgänger-Block, der zweite Block B2 eine zweite Verkettungsprüfsumme CRC2 vom ersten Block B1, und der dritte Block B3 eine dritte Verkettungsprüfsumme CRC3 vom zweiten Block B2.

Die jeweilige Verkettungsprüfsumme CRC1, CRC2, CRC3 wird vorzugsweise über den Block-Header des entsprechenden Vorgängerblockes gebildet. Die Verkettungsprüfsummen CRC können vorzugsweise unter Verwendung einer kryptographischen HashFunktion wie z.B. SHA-256, KECCAK-256 oder SHA-3 gebildet werden.

Zusätzlich kann jeder der Blöcke eine Datenblockprüfsumme umfassen. Diese kann beispielsweise mittels eines Hash-Baumes realisiert werden.

Um den Hash-Baum zu bilden, wird für jede Transaktion eines Daten(blockes) eine Transaktionsprüfsumme (z. B. ebenfalls ein Hash-Wert) berechnet. Alternativ oder zusätzlich kann eine Transaktionsprüfsumme, die vom Erzeuger der Transaktion vorzugsweise beim Erzeugen der Transaktion erstellt wurde, hierfür weiterverwendet werden.

Üblicherweise wird für einen Hash-Baum, z. B. ein Merkle Tree oder Patricia Tree, verwendet, dessen Wurzel-Hash-Wert/Wurzel-Prüfsumme vorzugsweise als entsprechende Datenblockprüfsumme in den jeweiligen Blöcken hinterlegt wird.

In einer Variante wird die Datenblockprüfsumme als Verkettungsprüfsumme verwendet.

Ein Block kann weiterhin einen Zeitstempel, eine digitale Signatur, einen Proof-of-Work-Nachweis aufweisen, so wie es in den Ausführungsformen der Erfindung erläutert wurde.

Die Blockkette selbst wird durch eine Blockketten-Infrastruktur mit mehreren Blockketten-Knoten realisiert.

Die verteilte Datenbank 301, die mittels der Blockkette BC realisiert ist, umfasst zudem noch eine erste Schnittstelle 305, eine zweite Schnittstelle 320 und eine Ausführungsumgebung 310, die über die Blockkette bzw. deren Infrastruktur kommunikativ miteinander verbunden sind.

Die erste Schnittstelle 305 ist zum Speichern eines Steuerungsprogrammcodes in einer Steuerungstransaktion (z. B. die sechste Transaktion T2b) eingerichtet, wobei die Steuerungstransaktion in einem zweiten Datenblock (z. B. Block B2) der verteilten Datenbank 301 gespeichert wird. Dabei umfasst der Steuerprogrammcode Steuerungsfunktionen zum Steuern des ersten Programmcodes und der Steuerungsprogrammcode wird durch die verteilte Datenbank ausgeführt.

Die zweite Schnittstelle 330 ist zum Zuordnen des ersten Programmcodes zu dem Steuerungsprogramm eingerichtet. Dies kann beispielsweise durch ein Speichern des ersten Programmcodes in der ersten Transkation T1a des ersten Blocks B1 realisiert werden.

Die Ausführungsumgebung 310 (z. B. eine virtuelle Maschine) nutzt dann den Steuerungsprogrammcode der Steuerungstransaktion, um den ersten Programmcode durch die verteilte Datenbank 301 auszuführen. Dies wird vorzugsweise durch die Blockketteninfrastruktur realisiert, indem beispielsweise eine Vielzahl von Knoten des verteilten Datenbanksystems 301 die Ausführungsumgebung bildet.

Das verteilte Datenbanksystem bzw. seine Knoten (also die Blockketten-Knoten) kann beispielsweise zusätzlich noch eine weitere oder mehrere weitere Komponente/n umfassen, wie beispielsweise einen Prozessor, eine Speichereinheit, ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können. Die weitere/n Komponente/n können beispielsweise ebenfalls über die Blockkette bzw. deren Infrastruktur miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Mit der in den Ausführungsbeispielen genannten Erfindung ist es beispielsweise möglich auf einen Smart Contract, der fehlerhaft programmiert ist, zu regieren und diesen ggf. abzubrechen. Weiterhin können auch herkömmliche Betriebssysteme und Cloud-basierte Betriebssysteme (Microsoft Azure, Amazon AWS, Siemens Mindsphere) mittels der Erfindung dahingehend verbessert werden, um eine Ausführung eines Smart Contracts/(ersten) Programmcodes zu verbessern.

Hierdurch werden insbesondere Prozesse (insbesondere Blockchain Smart Contracts, Betriebssystem-Prozesse, Cloud-App) deutlich besser und deutlich kontrollierter ausgeführt.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001

## Patentansprüche

1. Verfahren zum rechnergestützten Ausführen eines ersten Programmcodes mit folgenden Verfahrensschritten:
- Speichern (110) eines Steuerungsprogrammcodes in einer Steuerungstransaktion, wobei
- die Steuerungstransaktion in einem zweiten Datenblock einer verteilten Datenbank gespeichert wird,
- der Steuerungsprogrammcode Steuerungsfunktionen zum Steuern des ersten Programmcodes umfasst,
- der Steuerungsprogrammcode durch die verteilte Datenbank ausgeführt wird;
- Zuordnen (120) des ersten Programmcodes zu dem Steuerungsprogramm;
- Ausführen (130) des ersten Programmcodes mittels der verteilten Datenbank und des Steuerungsprogrammcode,
- wobei insbesondere durch eine Vielzahl von Knoten der verteilten Datenbank das Ausführen realisiert wird.

2. Verfahren nach Anspruch 1, wobei die Datenblöcke über eine kryptographische Hashfunktion (H) miteinander verkettet werden.

3. Verfahren nach Anspruch 1 oder 2, wobei
- die verteilte Datenbank eine Blockkette ist und ein Datenblock ein Block der Blockkette ist oder
- die verteilte Datenbank eine Peer-to-Peer Datenbank ist.

4. Verfahren nach einem der vorhergehenden Ansprüche, wobei eine jeweilige Steuerungsfunktion der Steuerungsfunktionen
- ein Laden und/oder Ausführen des ersten Programmcodes und/oder eines weiteren Programmcodes steuert, oder
- ein Starten mindestens eines Prozesses steuert, der den ersten Programmcode und/oder den weiteren Programmcode ausführt, wobei der Prozess insbesondere durch die verteile Datenbank ausgeführt wird, oder
- ein Beenden/Abbrechen mindestens eines Prozesses/mindestens des einen Prozesses steuert, der den ersten Programmcode und/oder den weiteren Programmcode ausführt, oder
- ein Zuordnen von Berechtigungsinformation an mindestens einen Prozess/mindestens den einen Prozess oder an Dateien steuert, die den ersten Programmcode und/oder den weiteren Programmcode ausführen und/oder von diesen verwendet werden, oder
- ein Zuordnen von Prioritätsinformationen an mindestens einen Prozesses/mindestens den einen Prozess steuert, die den ersten Programmcode oder den weiteren Programmcode ausführen, oder
- ein Zuordnen von Prioritätsinformationen an den ersten Programmcode oder den weiteren Programmcode,
- ein Zuordnen von Quotas an die jeweiligen Programmcodes oder Prozesse steuert, oder
- eine Steuerungsfunktion eine Kombination der genannten Steuerungsaktionen steuert.

5. Verfahren nach einem der vorhergehenden Ansprüche, wobei
- ein Steuerbefehl einer oder mehreren der Steuerungsfunktionen zugeordnet wird;

6. Verfahren nach einem der vorhergehenden Ansprüche, insbesondere Anspruch 4 oder 5, wobei
- eine Befehlstransaktion mit einem Steuerbefehl in einem dritten Datenblock der verteilten Datenbank gespeichert wird,
- mittels der verteilten Datenbank und dem Steuerungsprogrammcode unter Verwendung der dem Steuerbefehl zugeordneten Steuerungsfunktion ein Ausführen des ersten Programmcodes gesteuert wird.

7. Verfahren nach einem der vorhergehenden Ansprüche, wobei der Steuerungsprogrammcode Ausführungsdaten zum ersten Programmcode bereitstellt.

8. Verfahren nach einem der vorhergehenden Ansprüche, wobei beim Zuordnen der erste Programmcode in einer ersten Transaktion eines ersten Datenblocks der verteilten Datenbank gespeichert wird.

9. Verfahren nach einem der vorhergehenden Ansprüche, wobei beim Zuordnen eine Zuordnungsinformation in einer Zuordnungstransaktion eines/des ersten Datenblocks der verteilten Datenbank gespeichert wird, wobei insbesondere mittels der Zuordnungsinformation der erste Programmcode zu dem Steuerungsprogrammcode zugeordnet wird;

10. Verfahren nach einem der vorhergehenden Ansprüche, wobei der Steuerungsprogrammcode einen nutzbaren Funktionsumfang des ersten Programmcodes auf einen vorgegebenen Funktionsumfang reduziert.

11. Verteiltes Datenbanksystem zum Ausführen eines ersten Programmcodes aufweisend:
- eine erste Schnittstelle zum Speichern eines Steuerungsprogrammcodes in einer Steuerungstransaktion, wobei
- die Steuerungstransaktion in einem zweiten Datenblock einer verteilten Datenbank gespeichert wird,
- der Steuerprogrammcode Steuerungsfunktionen zum Steuern des ersten Programmcodes umfasst,
- der Steuerungsprogrammcode durch die verteilte Datenbank ausgeführt wird;
- eine zweite Schnittstelle zum Zuordnen des ersten Programmcodes zu dem Steuerungsprogramm;
- eine Ausführungsumgebung, wobei
- der erste Programmcode mittels des Steuerungsprogrammcodes ausgeführt wird,
- insbesondere eine Vielzahl von Knoten des verteilten Datenbanksystems die Ausführungsumgebung bilden.

12. Computerprogrammprodukt mit Programmbefehlen zur Durchführung der Verfahren nach einem der Ansprüche 1 - 10.

13. Computerprogrammprodukt mit Programmbefehlen für ein Erstellungsgerät, das mittels der Programmbefehle konfiguriert wird, die verteilte Datenbank nach Anspruch 11 zu erstellen.

14. Bereitstellungsvorrichtung für das Computerprogrammprodukt nach Anspruch 12 und/oder 13, wobei die Bereitstellungsvorrichtung das Computerprogrammprodukt speichert und/oder bereitstellt.

## Geänderte Patentansprüche

### Geänderte Patentansprüche gemäss Regel 137(2) EPÜ.

1. Verfahren zum rechnergestützten Ausführen eines ersten Programmcodes mit folgenden Verfahrensschritten:
- Speichern (110) eines Steuerungsprogrammcodes in einer Steuerungstransaktion, wobei
- die Steuerungstransaktion in einem zweiten Datenblock einer verteilten Datenbank gespeichert wird,
- der Steuerungsprogrammcode Steuerungsfunktionen zum Steuern des ersten Programmcodes umfasst,
- der Steuerungsprogrammcode durch die verteilte Datenbank ausgeführt wird;
- Zuordnen (120) des ersten Programmcodes zu dem Steuerungsprogramm;
- Ausführen (130) des ersten Programmcodes in einer Ausführungsumgebung der verteilten Datenbank und mittels des Steuerungsprogrammcode, wobei das Ausführen (130) durch eine Vielzahl von Knoten der verteilten Datenbank realisiert wird,
**dadurch gekennzeichnet, dass**
- die verteilte Datenbank eine Blockkette ist und ein Datenblock ein Block der Blockkette ist, und
- der Steuerungsprogrammcode einen nutzbaren Funktionsumfang des ersten Programmcodes auf einen vorgegebenen Funktionsumfang reduziert.

2. Verfahren nach Anspruch 1, wobei die Datenblöcke über eine kryptographische Hashfunktion (H) miteinander verkettet werden.

3. Verfahren nach Anspruch 1 oder 2, wobei eine jeweilige Steuerungsfunktion der Steuerungsfunktionen
- ein Laden und/oder Ausführen des ersten Programmcodes und/oder eines weiteren Programmcodes steuert, oder
- ein Starten mindestens eines Prozesses steuert, der den ersten Programmcode und/oder den weiteren Programmcode ausführt, wobei der Prozess insbesondere durch die verteile Datenbank ausgeführt wird, oder
- ein Beenden/Abbrechen mindestens eines Prozesses/mindestens des einen Prozesses steuert, der den ersten Programmcode und/oder den weiteren Programmcode ausführt, oder
- ein Zuordnen von Berechtigungsinformation an mindestens einen Prozess/mindestens den einen Prozess oder an Dateien steuert, die den ersten Programmcode und/oder den weiteren Programmcode ausführen und/oder von diesen verwendet werden, oder
- ein Zuordnen von Prioritätsinformationen an mindestens einen Prozesses/mindestens den einen Prozess steuert, die den ersten Programmcode oder den weiteren Programmcode ausführen, oder
- ein Zuordnen von Prioritätsinformationen an den ersten Programmcode oder den weiteren Programmcode,
- ein Zuordnen von Quotas an die jeweiligen Programmcodes oder Prozesse steuert, oder
- eine Steuerungsfunktion eine Kombination der genannten Steuerungsaktionen steuert.

4. Verfahren nach einem der vorhergehenden Ansprüche, wobei
- ein Steuerbefehl einer oder mehreren der Steuerungsfunktionen zugeordnet wird;

5. Verfahren nach einem der vorhergehenden Ansprüche, wobei
- eine Befehlstransaktion mit einem Steuerbefehl in einem dritten Datenblock der verteilten Datenbank gespeichert wird,
- mittels der verteilten Datenbank und dem Steuerungsprogrammcode unter Verwendung der dem Steuerbefehl zugeordneten Steuerungsfunktion ein Ausführen des ersten Programmcodes gesteuert wird.

6. Verfahren nach einem der vorhergehenden Ansprüche, wobei der Steuerungsprogrammcode Ausführungsdaten zum ersten Programmcode bereitstellt.

7. Verfahren nach einem der vorhergehenden Ansprüche, wobei beim Zuordnen der erste Programmcode in einer ersten Transaktion eines ersten Datenblocks der verteilten Datenbank gespeichert wird.

8. Verfahren nach einem der vorhergehenden Ansprüche, wobei beim Zuordnen eine Zuordnungsinformation in einer Zuordnungstransaktion eines/des ersten Datenblocks der verteilten Datenbank gespeichert wird, wobei insbesondere mittels der Zuordnungsinformation der erste Programmcode zu dem Steuerungsprogrammcode zugeordnet wird.

9. Verteiltes Datenbanksystem zum Ausführen eines ersten Programmcodes aufweisend:
- eine erste Schnittstelle zum Speichern eines Steuerungsprogrammcodes in einer Steuerungstransaktion, wobei
- die Steuerungstransaktion in einem zweiten Datenblock einer verteilten Datenbank gespeichert wird,
- der Steuerprogrammcode Steuerungsfunktionen zum Steuern des ersten Programmcodes umfasst,
- der Steuerungsprogrammcode durch die verteilte Datenbank ausgeführt wird;
- eine zweite Schnittstelle zum Zuordnen des ersten Programmcodes zu dem Steuerungsprogramm;
- eine Ausführungsumgebung, wobei
- der erste Programmcode mittels des Steuerungsprogrammcodes ausgeführt wird, wobei das Ausführen (130) durch eine Vielzahl von Knoten der verteilten Datenbank realisiert werden kann,
**dadurch gekennzeichnet, dass**
- die verteilte Datenbank eine Blockkette ist und ein Datenblock ein Block der Blockkette ist, und
- der Steuerungsprogrammcode einen nutzbaren Funktionsumfang des ersten Programmcodes auf einen vorgegebenen Funktionsumfang reduzieren kann.
